# FASCICULE DE BREVET EUROPEEN

(11) **EP 1 991 480 B1**
(45) Date de publication et mention de la délivrance du brevet: **29.06.2011**
(21) Numéro de dépôt: 07726639.3
(22) Date de dépôt: 06.03.2007
(51) Int. Cl.: B65G 47/88, G07F 11/16

(54) **DISPOSITIF POUR DISTRIBUER ET EJECTER AUTOMATIQUEMENT DES PRODUITS STOCKES EN RANGEES LONGITUDINALES PARALLELES**
VORRICHTUNG ZUM AUTOMATISCHEN AUSGEBEN UND AUSSTOSSEN VON IN PARALLELEN LÄNGSREIHEN GELAGERTEN PRODUKTEN
DEVICE FOR AUTOMATICALLY DISPENSING AND EJECTING PRODUCTS STORED IN PARALLEL LONGITUDINAL ROWS

(30) Priorité: 06.03.2006 FR 0601970
(43) Date de publication de la demande: 19.11.2008
(73) Titulaire: ARX, 72200 Bazouges sur le Loir (FR)
(72) Inventeur: KATRITZKY, Rupert, 98000 Monaco (MC); PIGGOTT, Bruce, Hertfordshire AL7 1QT (GB); PAINTER, David, Lowestoft Norfolk NR33 9NS (GB); HASENFRATZ, Luc, 67500 Haguenau (FR); NOGUES, Guillaume, 72200 Mareil-sur-Loir (FR); FONTENAY, Jérémy, 72200 La Flèche (FR); CONNIER, Jean-Louis, 72200 La Flèche (FR)
(74) Mandataire: Kohn, Philippe
(86) Numéro de dépôt international: PCT/EP2007/052069
(87) Numéro de publication internationale: WO 2007/101843

(56) Documents cités:
- EP-A- 1 275 597
- WO-A-00/10895
- DE-A1- 1 908 003
- FR-A- 2 773 360
- FR-A- 2 837 479
- NL-C2- 1 023 154
- US-A1- 2005 040 180

## Description

### DOMAINE TECHNIQUE DE L'INVENTION

La présente invention concerne un dispositif pour distribuer et éjecter automatiquement des produits.

### ETAT DE LA TECHNIQUE

La présente invention concerne plus particulièrement un dispositif pour distribuer et éjecter automatiquement des produits, tels que par exemple des boîtes de médicaments, stockés en rangées longitudinales parallèles, qui comporte au moins un plateau, ou "rack", comportant :
- une série de canaux, ou couloirs, adjacents transversalement dont chacun est apte à contenir une rangée de produits qui sont agencés dans un même plan, qui sont séparés deux à deux par une cloison longitudinale orthogonale audit plan, et dont chacun comporte un fond plat sur lequel reposent les produits ;
- des moyens de butée agencés à l'extrémité longitudinale avant de chaque canal contre lesquels le premier produit avant de chaque rangée est retenu en appui longitudinal ;
- et une série de moyens commandés d'éjection dont chacun est associé à un canal et est susceptible de coopérer avec ledit premier produit avant pour le faire passer verticalement par-dessus lesdits moyens de butée, en vue de son éjection hors du canal. Voir par exemple EP-1.275.597.

L'invention vise à proposer une nouvelle conception des moyens commandés d'éjection d'un dispositif de ce type, permettant notamment de simplifier la commande de l'éjection simultanée de plusieurs produits.

### RESUME DE L'INVENTION

Dans ce but, l'invention propose un dispositif caractérisé en ce que chaque dispositif d'éjection comporte :
- une plaque mobile d'éjection qui est apte à agir, directement ou indirectement, sur la face inférieure d'au moins ledit premier produit avant pour en provoquer l'éjection ;
- un actionneur qui est associé à chaque canal, qui est relié mécaniquement à ladite plaque d'éjection et qui comporte un organe mobile qui est apte à être commandé entre une position de repos et une position de travail en vue de provoquer l'éjection ;
- et un organe motorisé d'entraînement qui est apte coopérer avec ledit organe mobile en position de travail pour provoquer un déplacement vertical globalement vers le haut de la plaque d'éjection ;

Selon d'autres caractéristiques de l'invention :
- le corps de l'actionneur est solidaire de la plaque d'éjection, et l'organe motorisé d'entraînement est apte coopérer avec ledit organe mobile en position de travail pour provoquer un déplacement vertical globalement vers le haut de l'actionneur, et ainsi de la plaque d'éjection à laquelle l'actionneur est relié mécaniquement ;
- la plaque mobile d'éjection est une plaque globalement parallèle audit plan et dont la face supérieure est apte à agir, directement ou indirectement, sur la face inférieure d'au moins ledit premier produit avant ;
- la plaque mobile d'éjection est une plaque flexible déformable élastiquement entre une position basse de repos vers laquelle elle est rappelée élastiquement, et une position haute d'éjection dans laquelle elle s'étend verticalement vers le haut ;
- le corps de l'actionneur est porté par la face supérieure de la plaque flexible d'éjection, et la face supérieure du boîtier de l'actionneur est apte à coopérer avec la face inférieure dudit premier produit, en s'étendant vers le haut, notamment à travers une fenêtre correspondante, formée en vis-à-vis, d'une plaque de fond commune à tous les canaux d'un plateau ;
- la plaque mobile d'éjection est une plaque orthogonale audit plan et dont le bord longitudinal supérieur est apte à agir sur la face inférieure d'au moins ledit produit avant pour en provoquer l'éjection ;
- chaque cloison intermédiaire est une plaque de séparation qui est montée mobile entre une position haute active de séparation dans laquelle elle fait saillie verticalement pour séparer deux canaux adjacents et une position basse escamotée, chaque plaque mobile de séparation est apte à constituer une plaque mobile d'éjection dont le bord longitudinal supérieur est apte à agir sur la face inférieure d'au moins ledit produit avant pour en provoquer l'éjection, et lesdits moyens motorisés sont aptes à entraîner chaque plaque de séparation faisant fonction de plaque d'éjection entre sa position basse escamotée et une position haute d'éjection ;
- ladite position haute d'éjection est une position intermédiaire entre lesdites position basse escamotée et haute de séparation ;
- l'actionneur est un électroaimant dont le noyau mobile est apte à être commandé entre une position rentrée de repos et une position sortie de travail dans laquelle il est susceptible de coopérer avec l'organe motorisé d'entraînement ;
- l'organe motorisé d'entraînement est un organe commun à tous les moyens d'éjection qui est apte coopérer simultanément avec tous ceux desdits organes mobiles qui sont en position de travail, pour provoquer l'éjection simultanée desdits premiers produits avant contenus dans les canaux correspondants ;
- l'organe motorisé d'actionnement est une barre transversale d'entraînement qui est entraînée en déplacement, par un moteur de commande d'éjection, entre une position basse de repos et une position haute d'éjection dans laquelle elle coopère simultanément avec lesdits organes mobiles en position de travail ;
- l'organe motorisé d'actionnement est une barre transversale d'entraînement qui est entraînée en rotation autour de son axe, par un moteur de commande d'éjection, entre une position angulaire de repos et une position angulaire de travail, et qui porte une série de leviers radiaux liés en rotation à la barre d'entraînement et dont chacun est apte à coopérer avec un organe mobile en position de travail d'un canal associé ;
- chaque levier radial comporte une branche qui, en position angulaire de repos de la barre d'entraînement, fait fonction de butée agencée à l'extrémité longitudinale avant de chaque canal contre laquelle le premier produit avant de chaque rangée est retenu en appui longitudinal.

### BREVE DESCRIPTION DES FIGURES

D'autres caractéristiques et avantages de l'invention apparaîtront à la lecture de la description détaillée qui va suivre pour laquelle on se reportera aux dessins annexés qui illustrent, à titre non limitatif, plusieurs modes de réalisation et variantes d'un dispositif selon les enseignements de l'invention et dans lesquels :
- la figure 1 est une vue en perspective de dessus et de trois-quarts avant d'un premier mode de réalisation d'un dispositif qui n'est équipé, à titre d'exemple, que de son plateau inférieur et d'un plateau supérieur ;
- la figure 2 est une vue en perspective de dessus, selon un autre angle du dispositif de la figure 1 ;
- la figure 3 est une vue en élévation de dessus du dispositif de la figure 1 ;
- la figure 4 est une vue en perspective de dessous et de trois-quarts arrière du dispositif de la figure 1 ;
- la figure 5 est une vue en perspective de la plaque de fond inférieure ;
- la figure 6 est une vue en perspective de la plaque de fond du plateau du plateau supérieur ;
- la figure 7 est une vue en perspective illustrant l'assemblage d'une plaque de fond avec ses deux plaques à circuits imprimés avant et arrière et sa plaque de doublage ;
- la figure 8 est une vue en perspective d'une plaque à circuits imprimés avant avec ses lames flexibles ;
- la figure 9 est une vue en perspective d'une plaque à circuits imprimés arrière équipée de certains de ses composants principaux ;
- la figure 10 est une vue de détail d'une plaque de séparation formant cloison de séparation ;
- la figure 11 est une vue de détail illustrant une plaque de séparation en position active ;
- la figure 12 est une vue en perspective à plus grande échelle de la partie supérieure de droite de la figure 1 qui en illustre seulement certains composants ;
- la figure 13 est une vue analogue à celle de la figure 12 qui illustre la partie inférieure droite de la figure 1 ;
- la figure 14 est une vue de la partie inférieure droite de la figure 13, selon un autre angle de vue ;
- la figure 15 est une vue analogue à celle de la figure 14 qui illustre seulement certains des composants ;
- la figure 16 est une vue en perspective d'un électroaimant avec sa tige mobile en position sortie de travail ;
- la figure 17 est une vue schématique en perspective d'un deuxième mode de réalisation d'un dispositif ;
- la figure 18 est une vue de face à plus grande échelle de la partie supérieure du dispositif de la figure 17 ;
- la figure 19 est une vue en perspective d'un des modules équipant le dispositif de la figure 17, illustré sans plaque adjacente de séparation ;
- la figure 20 est une vue de détail à plus grande échelle de la portion avant du module de la figure 19, illustré équipé d'une plaque latérale adjacente de séparation ;
- la figure 21A est une vue de dessus du module de la figure 19 avec sa plaque centrale d'éjection et son électroaimant en position de repos ;
- la figure 21B est une vue latérale de la figure 21A ;
- la figure 21C est une vue analogue à celle de la figure 21B sur laquelle la plaque centrale est en position haute d'éjection ;
- la figure 21D est une vue analogue à celle de la figure 21C qui illustre la position de repos la plaque centrale lorsque l'électroaimant n'est pas activé ;
- les figures 22A à 22D sont des vues similaires à celles des figures 21A à 21D qui illustrent une variante de réalisation des leviers radiaux d'éjection ;
- les figures 23A à 23C sont des vues similaires à celles des figures 21A à 21C qui illustrent une variante de réalisation des moyens de commande de la plaque d'éjection ;
- la figure 23E est une vue similaire à celle de la figure 23C qui illustre la plaque centrale du module dans sa position la plus haute dans laquelle elle fait fonction de plaque de séparation ;
- les figures 24A à 24D sont des vues similaires à celles des figures 21A à 21D qui illustrent une variante de réalisation des moyens d'éjection.

### DESCRIPTION DETAILLEE DES FIGURES

Dans la description qui va suivre, des composants identiques, similaires, ou analogues seront désignés par les mêmes chiffres de référence.

Pour faciliter la compréhension de la description et la rédaction des revendications, on adoptera la terminologie "vertical", "longitudinal", et "transversal" en référence au trièdre V, L, T indiqué aux figures.

L'orientation d'arrière en avant est l'orientation selon l'axe L du trièdre indiqué aux figures.

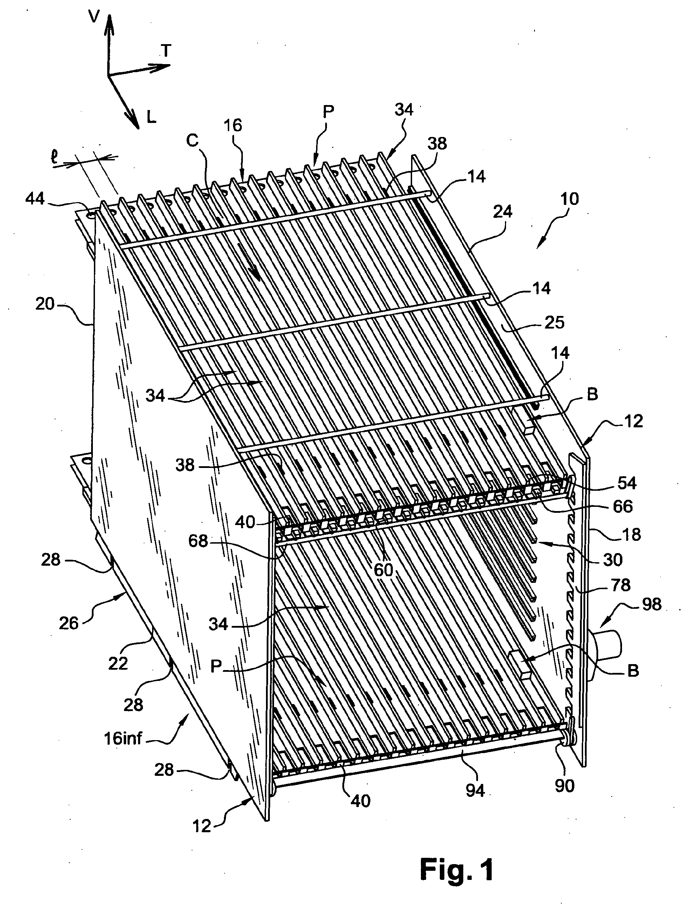

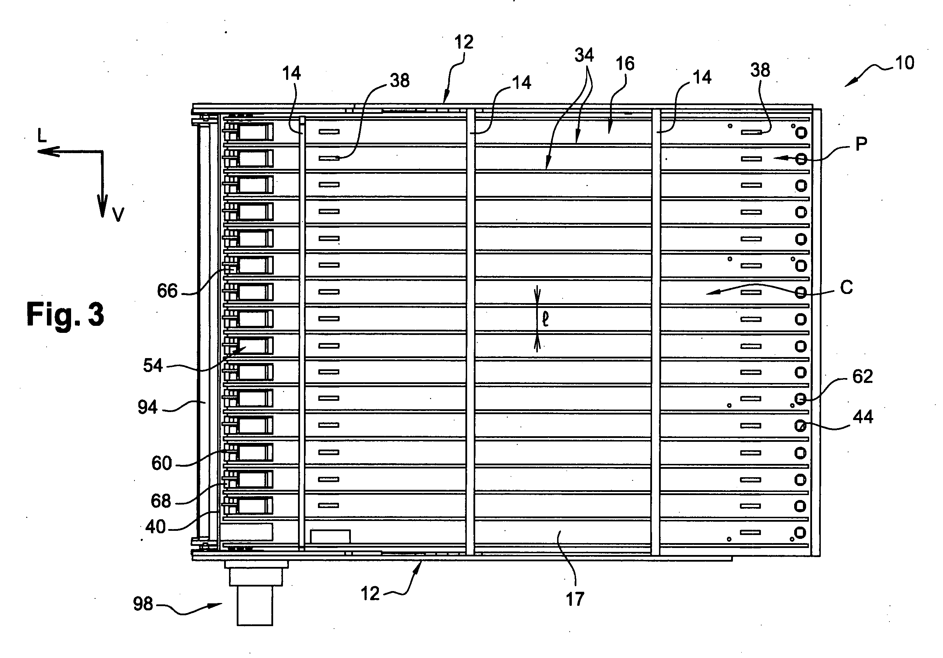

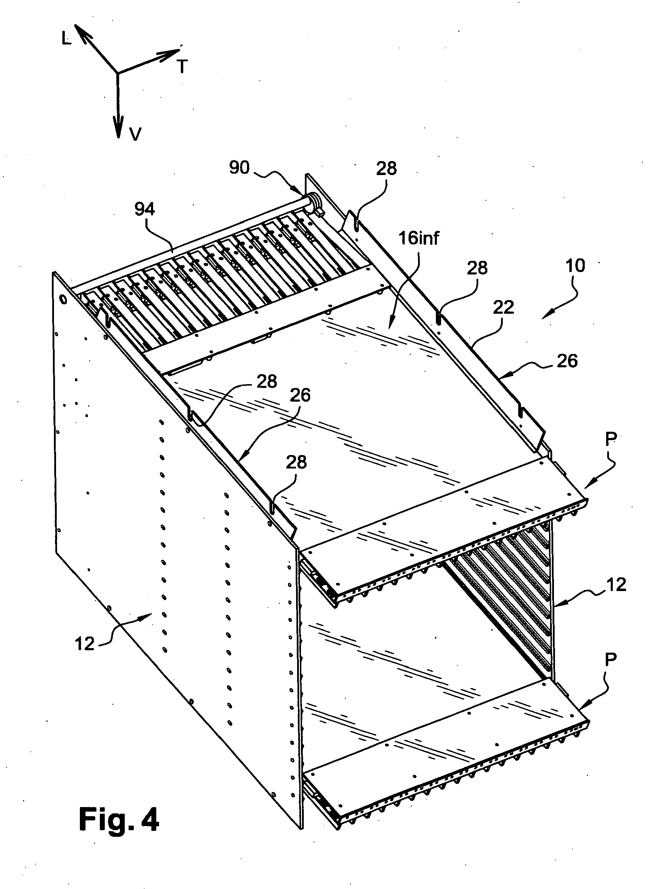

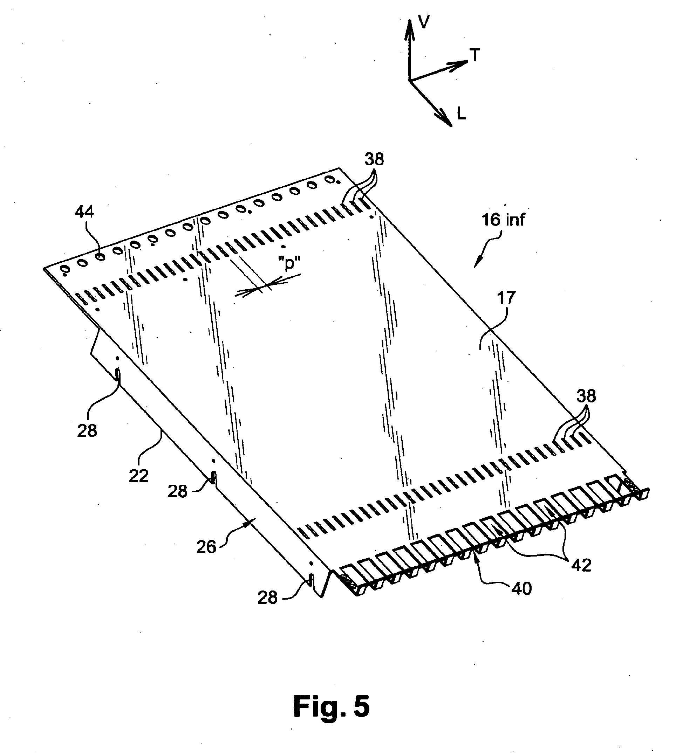

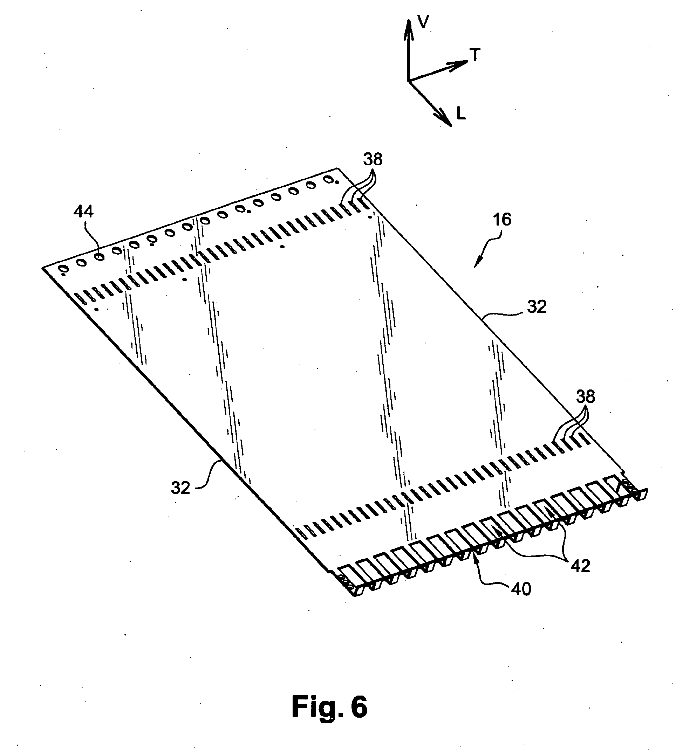

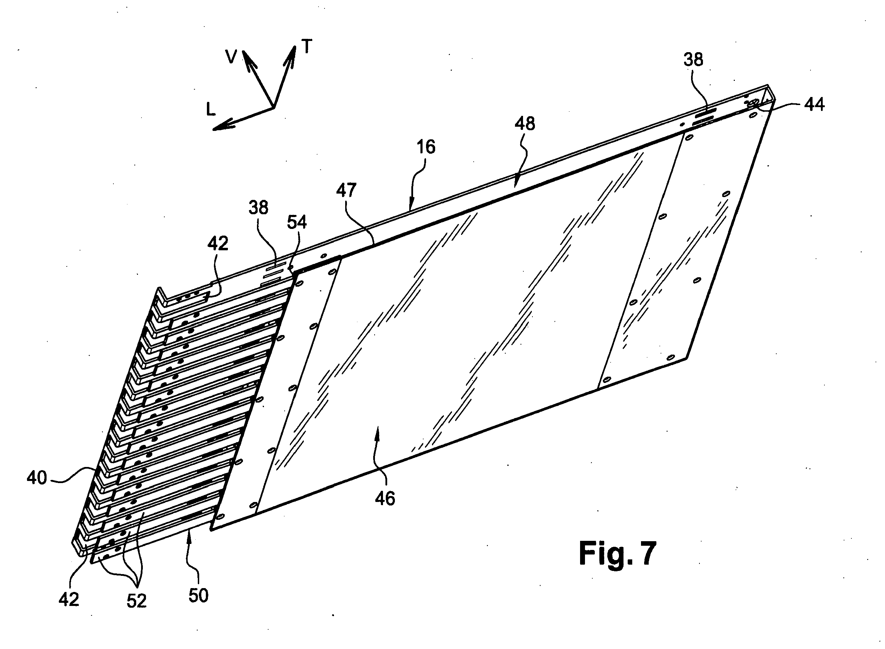

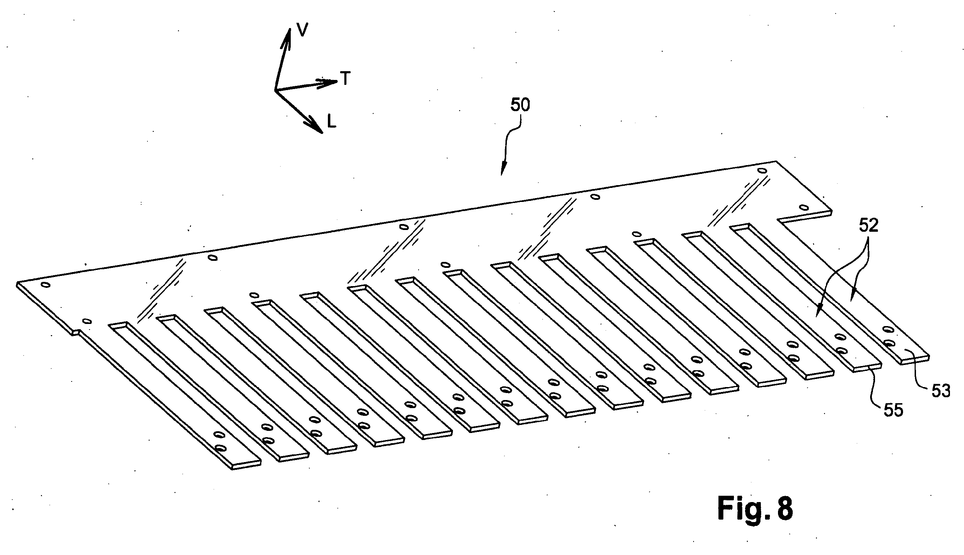

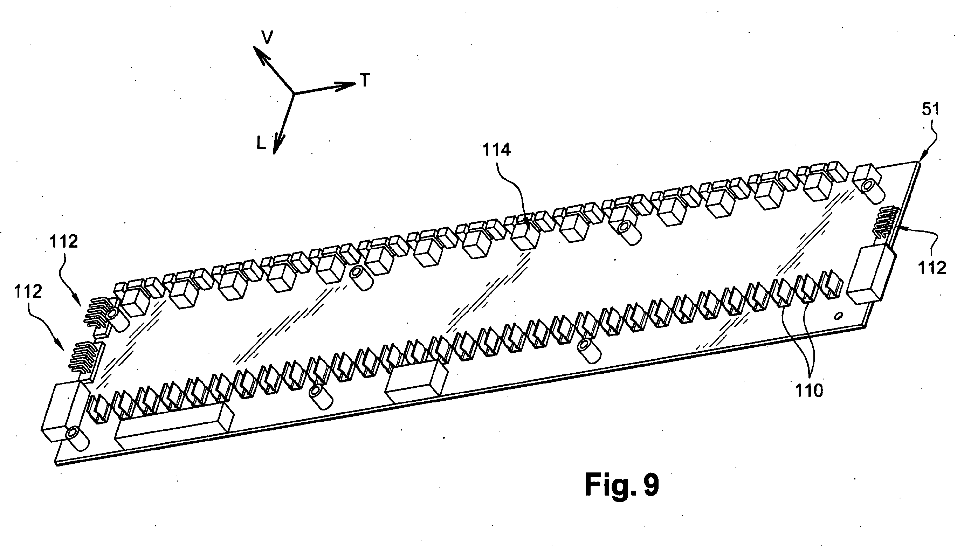

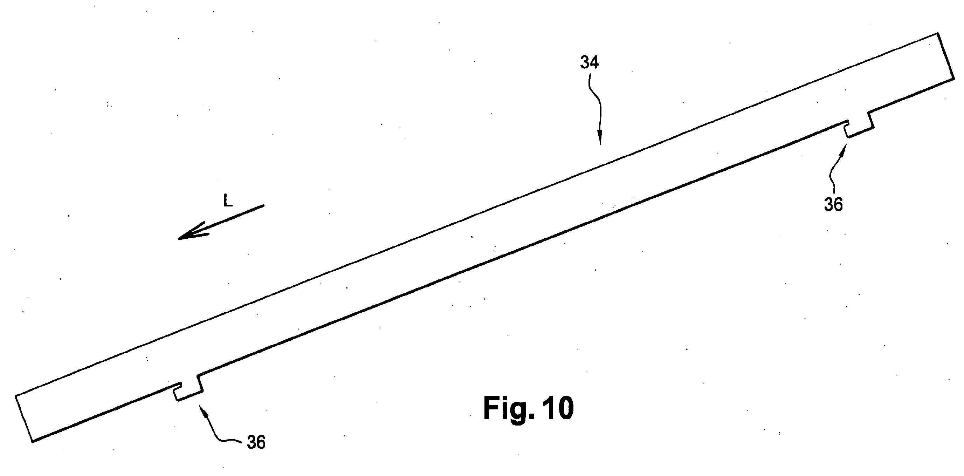

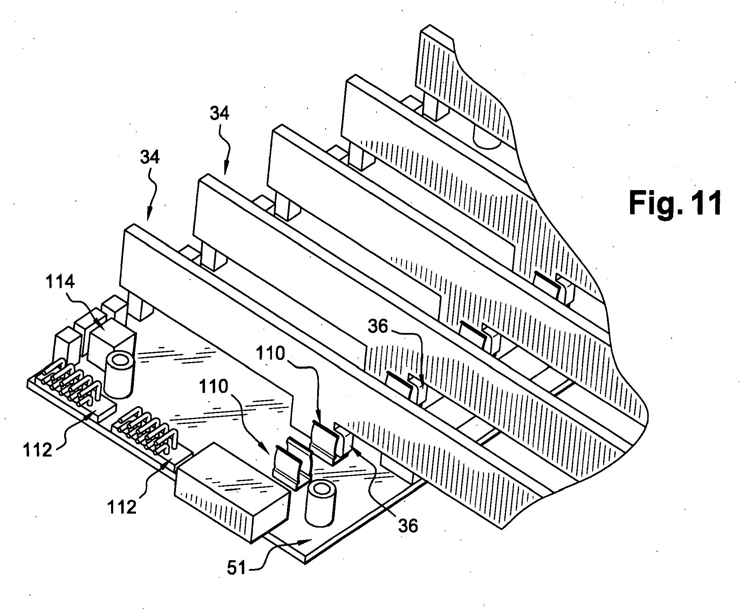

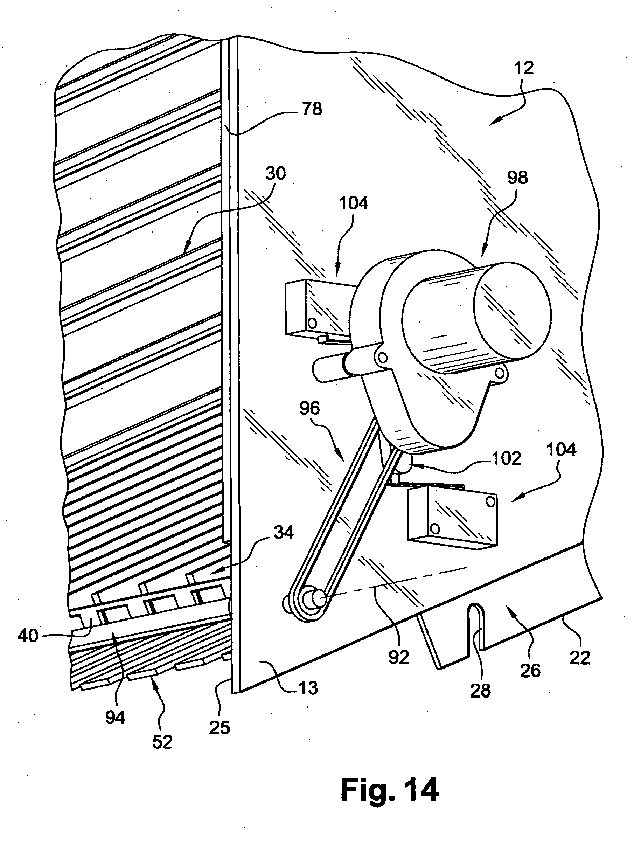

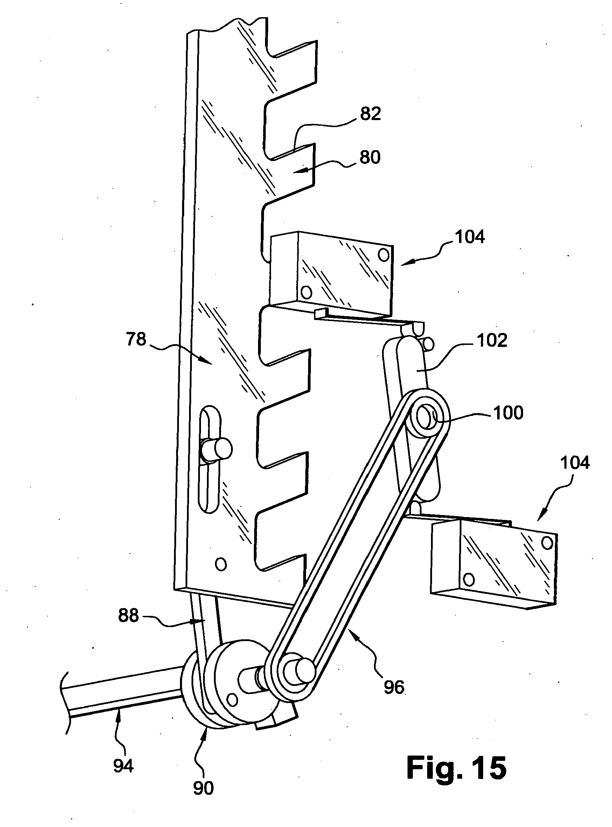

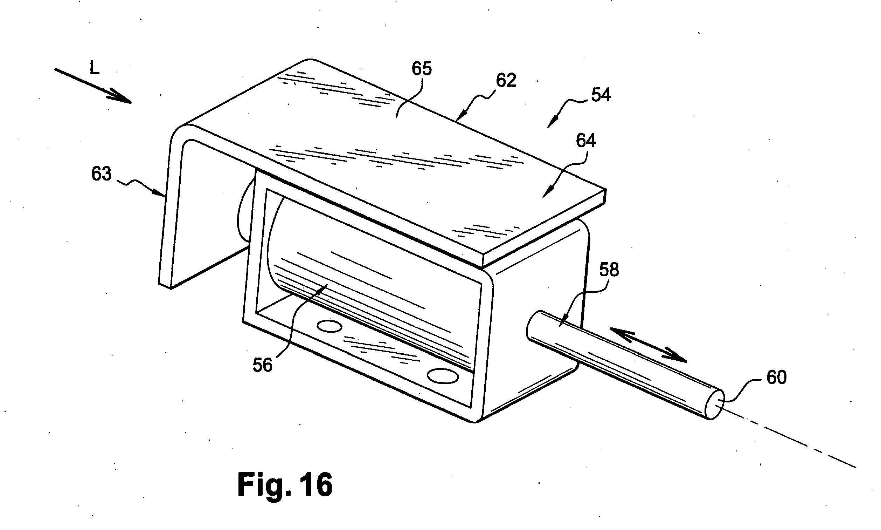

Hormis certains éléments motorisés d'entraînement, le dispositif 10 selon le premier mode de réalisation illustré aux figures 1 à 16, présente une symétrie générale de conception par rapport à un plan vertical et longitudinal médian PVL indiqué à la figure 3.

Le dispositif 10 illustré à la figure 1 comporte un châssis qui est susceptible de recevoir plusieurs plateaux P superposés de distribution et d'éjection de produits, tels que par exemples ici des boîtes B de médicaments.

Le dispositif comporte deux plaques latérales verticales 12 d'orientation longitudinale qui, pour constituer le châssis ou bâti, sont reliées entre elles, d'une part, par trois barres 14 de liaison transversales et supérieures coplanaires sur lesquelles sont vissées les plaques latérales et d'autre part, en partie inférieure, par une plaque transversale de fond inférieure 16inf sur lesquelles sont vissées les plaques latérales 12.

Chaque plaque latérale 12 est délimitée par deux bords verticaux avant 18 et arrière 20 et par deux bords longitudinaux inférieur 22 et supérieur 24 parallèles et qui sont inclinés par rapport à l'horizontale d'un angle alpha (α).

La plaque de fond inférieure 16inf et les trois barres supérieures de liaison 14 s'étendent aussi dans des plans parallèles inclinés de l'angle alpha.

La plaque de fond inférieure 16inf comporte deux pattes latérales longitudinales 26, sur lesquelles sont vissées les plaques latérales, qui s'étendent verticalement vers le bas au-delà des bords inférieurs 22 des plaques latérales 12 et dont chacune comporte trois encoches 28 ouvertes verticalement vers le bas et qui sont espacées selon le même pas longitudinal que les trois barres supérieures de liaison 14.

Une telle conception permet de superposer verticalement deux dispositifs 10 en emboîtant les barres de liaison 14 du dispositif bas dans les encoches 28 du dispositif haut, avec les pattes latérales 26 de la plaque de fond inférieure 16inf du dispositif haut qui sont reçues transversalement entre les faces internes 25 des parties supérieures des plaques latérales 12 du dispositif bas.

Sur sa face interne 25, chaque plaque latérale 12 peut être équipée d'une série de glissières parallèles 30 superposées verticalement et qui sont inclinées de l'angle alpha. Une paire de glissières latérales opposées 30 de même "altitude" en vis-à-vis sont susceptibles de recevoir une plaque de fond 16 d'un plateau P qui, lorsqu'elle est en position montée dans ses deux glissières 30, est ainsi montée orientée selon l'inclinaison alpha par rapport à l'horizontale.

A cet effet, chaque plaque de fond 16, autre que la plaque de fond inférieure 16inf, est délimitée par deux bords latéraux longitudinaux 32 qui sont reçus dans les deux glissières 30 de la paire correspondante.

Les glissières 30 peuvent équiper les plaques latérales 12 à demeure ou bien être amovibles et être mises en place, par paires, lorsque l'on désire installer des plaques de fond 16 pour constituer des plateaux correspondants.

A cet effet, les plaques latérales 12 comportent des lumières dans lesquelles sont reçus des pions de positionnement et de montage des glissières 30.

La face supérieure 17 de chaque plaque de fond 16, 16inf est un plan incliné, d'arrière en avant, de l'angle alpha par rapport à l'horizontale et constituant un fond plat. Une boîte B posée sur la face supérieure 17 d'une plaque de fond 16, 16inf glisse ainsi par gravité de haut en bas et d'arrière en avant globalement selon la direction longitudinale L.

Dans ce mode de réalisation, et afin de constituer un plateau P, ou rack, formant un sous-ensemble unitaire, chaque plaque de fond inclinée porte une série de plaques, verticales et longitudinales, de séparation 34 qui divisent l'espace situé au-dessus de la face supérieure 17 de la plaque de fond en une série de canaux C, ou couloirs, longitudinaux inclinés dont chacun peut loger une série de boîtes alignées et adjacentes longitudinalement qui sont toutes sensiblement de même largeur transversale. Notamment, toutes les boîtes contenues dans un canal déterminé sont identiques et contiennent le même médicament.

Une plaque de séparation 34 en place s'étend dans un plan vertical longitudinal qui est orthogonal au plan incliné de la face supérieure 17 et elle constitue une cloison qui sépare deux canaux C adjacents.

Ainsi, chaque canal C est ouvert verticalement vers le haut et est délimité par les faces internes en vis-à-vis 35 de deux plaques de séparation consécutives et par la portion de la face supérieure 17 située entre ces deux plaques 34.

Dans ce mode de réalisation, chaque plaque de séparation 34 est fixée de manière amovible démontable sur la plaque de fond 16, 16inf.

A cet effet, chaque plaque de séparation 34 comporte, dans son bord longitudinal inférieur, une paire de pattes 36 en L, formant des crochets, qui sont agencées au voisinage des deux extrémités longitudinales avant et arrière de la plaque de séparation 34, qui sont orientées vers l'avant et qui sont aptes à être reçues dans une paire de fentes 38 alignées longitudinalement qui sont débouchantes à travers l'épaisseur de la plaque de fond.

Chaque plaque de fond comporte une série de x (ici x=33) paires de fentes 38 alignées longitudinalement par paires, qui sont ici espacées transversalement selon un pas constant "p".

Comme cela est par exemple illustré à la figure 3, la plaque de fond supérieure 16, comme la plaque de fond inférieure 16inf, est ici équipée de seulement dix-sept cloisons 34 espacées régulièrement de droite à gauche d'un pas constant égal à "2p" délimitant ainsi seize canaux C adjacents, dont quinze de même largeur "ℓ".

On obtient ainsi une conception modulaire de chaque plateau P de canaux C de rangement et de distribution de boîtes B, que constituent une plaque de fond 16, 16inf avec ses plaques de séparation 34, avec un nombre variable de canaux C de largeurs "ℓ" variables en fonction du nombre de cloisons 34 utilisées et de leurs différentes positions transversales sur la plaque de fond.

Pour retenir les boîtes B rangées dans les différents canaux C, chaque plaque de fond comporte une barre transversale 40 de butée avant qui est ici fixe et décalée verticalement vers le haut par rapport à la face supérieure 17 de la plaque de fond.

Ainsi la première boîte avant de chaque rangée de boîtes contenues dans un canal C est en appui, longitudinal vers l'avant et vers le bas, par gravité contre la portion en vis-à-vis de la barre de butée 40 qui s'étend transversalement en travers de l'extrémité ouverte avant du canal correspondant. La barre de butée 40 est ici réalisée venue de matière avec la plaque de fond 16, 16inf par découpe et pliage d'une tôle.

Au voisinage de son extrémité longitudinale avant, la plaque de fond comporte, outre la barre transversale de butée avant 40, une série de seize découpes longitudinales 42 constituant autant de fenêtres dont la fonction sera expliquée par la suite.

Chacune des seize fenêtres 42 s'étend aussi verticalement pratiquement jusqu'en haut de la barre transversale 40 commune de butée.

Au voisinage de son extrémité longitudinale arrière, la plaque de fond comporte aussi une série de seize trous débouchants 44 dont la fonction sera expliquée par la suite.

Chaque plaque commune de fond 16, 16inf est doublée, en dessous, par une plaque parallèle 46 de doublage à laquelle elle est fixée avec interposition d'entretoises afin de délimiter, entre ces deux plaques 16 (16inf) et 46 d'un plateau P, une cavité intermédiaire 48 de hauteur sensiblement constante apte à loger différents composants.

Au voisinage de son extrémité avant, la plaque de doublage 46 porte sur sa face supérieure 47 une plaque à circuits imprimés avant 50 dont le tronçon d'extrémité libre avant est découpé pour être divisé en seize parties constituant des lames longitudinales avant 52 dont chacune s'étend, en porte-à-faux, longitudinalement vers l'avant au-delà du bord transversal avant de la plaque de doublage, en regard d'une fenêtre associée 42 de la plaque de fond.

Les dimensions et l'épaisseur de chaque lame 52 de la plaque à circuits imprimés avant 50 confèrent à chaque lame 52 une capacité de déformation élastique, notamment vers le haut, pour en faire une lame flexible.

Dans ce mode de réalisation, chaque lame flexible 52 porte sur sa face supérieure 53 un actionneur qui est ici constitué par un électroaimant 54, dont l'axe est d'orientation longitudinale, comportant notamment un corps cylindrique longitudinal de bobine 56 et un noyau ou tige mobile 58 qui s'étend longitudinalement vers l'avant. Le tronçon d'extrémité libre 60 de la tige mobile 58 est susceptible d'occuper une position longitudinale sortie vers l'avant, dite de travail, et une position longitudinale rétractée vers l'arrière dite de repos. La tige 58 est rappelée élastiquement vers sa position de repos.

Le corps de bobine 56 de l'électroaimant 54 est logé dans un boîtier 62 dont la paroi supérieure longitudinale 64 délimite une face supérieure plane 65 qui est parallèle au plan de la face supérieure 53 de la lame flexible 52 et qui, dans l'état de repos (non déformée) de la lame flexible 52, est située légèrement en retrait vers le bas par rapport au plan de la face supérieure 17 de la plaque de fond 16, 16inf de manière à ne pas constituer un obstacle dans le canal C considéré et pour permettre ainsi à la boîte la plus avant d'atteindre la butée transversale avant 40.

Lorsque la bobine d'un électroaimant 54 est alimentée pour faire sortir longitudinalement vers l'avant la tige mobile 58 vers sa position de travail, au moins son tronçon d'extrémité libre avant 60 fait saillie longitudinalement vers l'avant au-delà de la butée transversale 40, et du bord transversal d'extrémité avant 55 de la lame flexible 52 sur laquelle est fixé l'électroaimant 54.

Sur son tronçon d'extrémité libre avant, chaque lame flexible 52 porte aussi un bloc capteur 66 qui, comme le tronçon avant de la lame flexible 52, s'étend en regard d'une fenêtre 42 de la plaque de fond et en retrait de la butée transversale commune 40.

Chaque bloc capteur 66 a pour première fonction de détecter la présence d'une boîte B en position longitudinale avant en appui contre la butée 40 et en regard d'une fenêtre 42 ainsi que, selon une variante possible, la position longitudinale avant sortie de travail du tronçon 60 de la tige mobile 58, ou la position longitudinale arrière de repos de ce tronçon lorsque la bobine 56 de l'électroaimant 54 n'est pas alimentée.

La position de l'électroaimant 54 sur la lame flexible 52 et la position relative de cette dernière en regard d'une fenêtre 42 de la plaque de fond, ainsi que la dimension verticale totale de l'électroaimant 54 sont telles que, lorsque la lame 52 est dans sa position de repos non fléchie dans laquelle elle s'étend dans le même plan que celui de la plaque du circuit imprimé avant 50, la face supérieure 65 du boîtier 62 est située légèrement verticalement vers le bas par rapport à la face supérieure 17 de la plaque de fond.

De plus, les dimensions de l'électroaimant 54 sont telles qu'il peut "monter" verticalement à travers la fenêtre 42 de manière que la plaque 64 avec sa face supérieure 65 fasse saillie verticalement à travers la fenêtre 42 dans le canal C correspondant, notamment pour coopérer avec la face inférieure d'une boîte B présente dans ce canal et en appui contre la butée 40.

Dans une telle position "haute" de l'électroaimant 54, la plaque verticale arrière 63 constitue une butée pour la boîte suivante qui est "arrêtée" par cette plaque et ne peut temporairement atteindre la butée 40.

Outre un électroaimant 54, les moyens commandés d'éjection d'une boîte avant contenu dans un canal C - pour la faire passer verticalement par-dessus la butée transversale commune 40 en vue de son éjection hors du canal C - comportent une barre transversale motorisée d'entraînement 68 qui est apte à coopérer avec le tronçon d'extrémité libre 60 de chaque tige mobile 58 d'électroaimant 54 en position sortie de travail pour provoquer un déplacement vertical, globalement vers le haut, de cette tige mobile 58 en "soulevant le tronçon 60.

Toute action verticale vers le haut sur une tige 58 provoque un entraînement vertical correspondant vers le haut de l'ensemble de l'électroaimant 54 grâce à la capacité de flexion de la lame flexible 52 qui le porte.

Dans ce mode de réalisation, chaque lame flexible 52 constitue une plaque mobile d'éjection qui est globalement parallèle à la plaque de fond qui la porte et dont la face supérieure 53 est apte à agir, ici indirectement par l'intermédiaire de l'électroaimant 54, sur la face inférieure de la boîte avant située en regard de la face supérieure 65 et de la fenêtre 42.

La barre transversale motorisée 68 est ici un organe commun à tous les canaux C d'un même plateau P, c'est-à-dire qu'elle est apte à coopérer simultanément avec toutes les tronçons d'extrémité 60 des tiges, ou organes, mobiles 58 des électroaimants 54 qui sont en position longitudinale avant de travail.

Chaque extrémité libre 72 d'une barre d'éjection 68 est guidée en coulissement, globalement verticalement vers le haut ou vers le bas, dans une lumière 74 d'une pièce de guidage 76 fixée à cet effet sur la face interne 25 d'une plaque latérale 12.

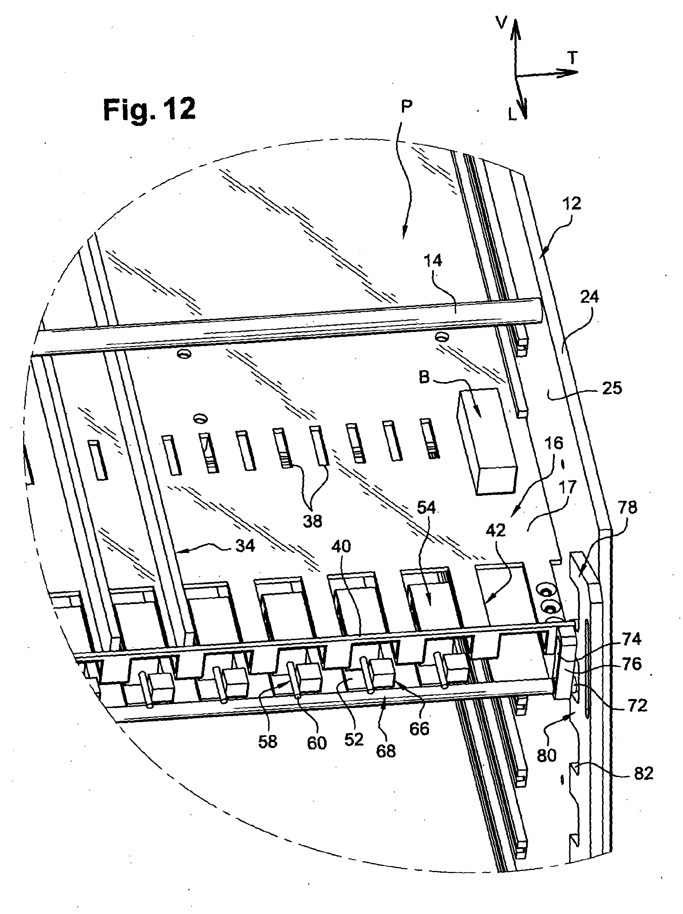

Au repos, chaque barre 68 est en appui vertical vers le bas par gravité dans le fond inférieur d'une lumière 74 comme illustré aux figures 1 et 12.

Pour provoquer le déplacement, globalement verticalement vers le haut, d'une barre d'entraînement 68, le dispositif comporte ici à titre d'exemple deux crémaillères mobiles 78 dont chacune est montée et guidée en coulissement vertical de bas en haut sur la face interne 25 d'une plaque 12.

Chaque crémaillère 78 comporte une série de dents 80 qui s'étendent longitudinalement vers l'arrière et dont chacune délimite une face supérieure 82 qui est apte à coopérer avec le tronçon d'extrémité libre 72 d'une barre d'entraînement 68 disposée au-dessus.

Pour provoquer les déplacements, notamment verticalement de bas en haut et simultanément des deux crémaillères 78, chaque crémaillère 78 est reliée, de manière articulée autour d'un axe transversal 86, à un levier de renvoi 88 qui est entraîné par un excentrique 90 monté à rotation, autour d'un axe transversal 92, par rapport à la cloison latérale 12.

Les deux excentriques 90, et donc les deux leviers 88 et les deux crémaillères 78, sont entraînés simultanément dans les deux sens grâce à une plaque transversale de synchronisation 94 qui est fixée aux deux excentriques opposés 90. La plaque 94 fait aussi fonction de barre motorisée d'entraînement pour le plateau inférieur constitué à partir de la plaque 16inf.

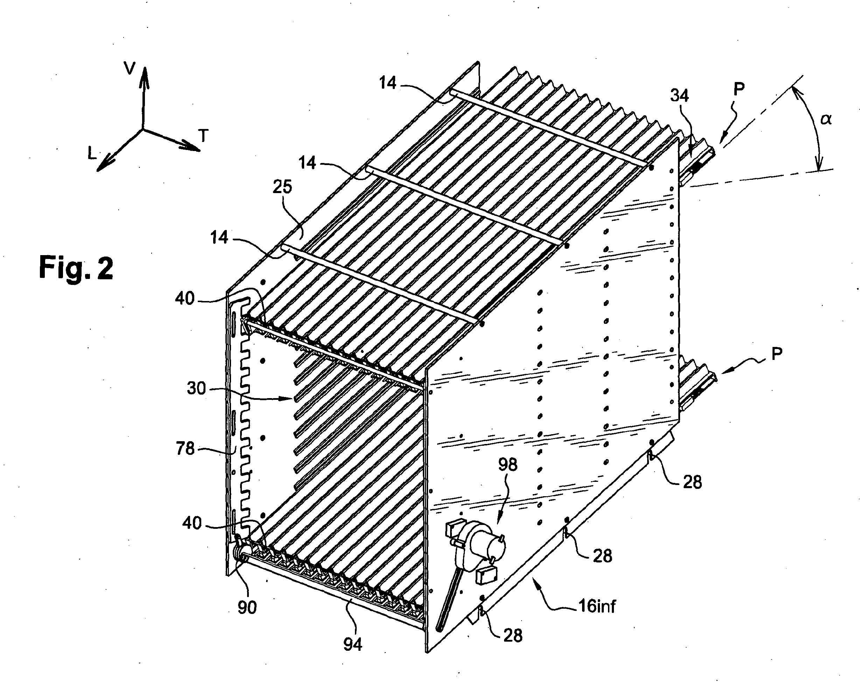

Pour leur entraînement en rotation, et donc l'entraînement des crémaillères 78 verticalement dans les deux sens, les excentriques 90 sont entraînés par une courroie 96 qui est elle-même entraînée par un moto-réducteur 98, ces composants étant agencés sur la face latérale externe 13 de la plaque verticale 12 de droite en considérant les figures 1 et 2.

L'axe motorisé, non représenté, du moto-réducteur 98 est apte à entraîner en rotation le galet 100 agissant sur la courroie 96 ainsi que, simultanément, un basculeur 102 apte à agir sur deux capteurs, diamétralement opposés, 104 de position angulaire du basculeur 102, et donc des excentriques.

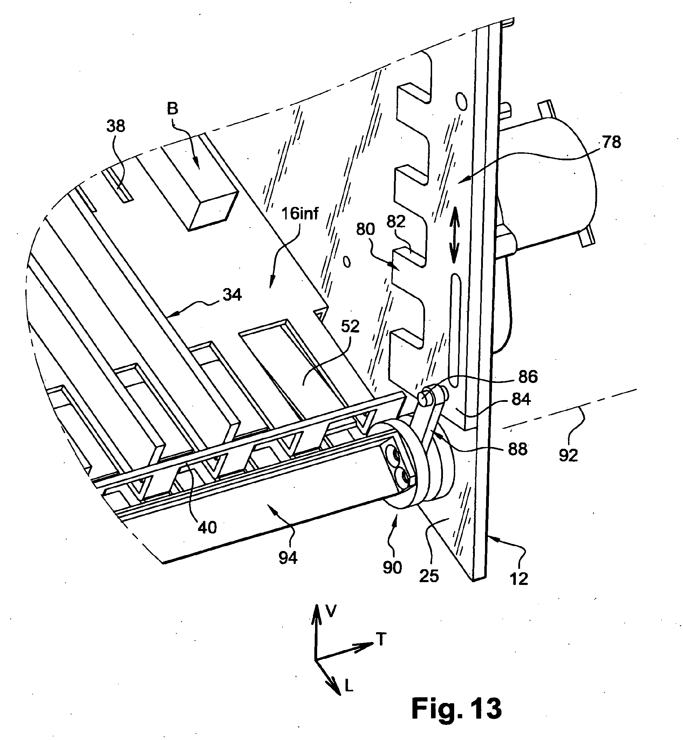

En considérant les figures 12 et 13, l'entraînement en rotation, dans le sens anti-horaire, des excentriques 90 provoque d'abord un déplacement globalement verticalement vers le haut des leviers de renvoi 88, et donc des crémaillères 78 qui viennent agir par les faces supérieures 82 des dents 80 sur les barres d'entraînement 68 présentes dans le dispositif et dont chacune vient elle-même agir sur tous les tronçons 60 des tiges mobiles 58 sortis en position de travail du plateau P associé.

La rotation des excentriques 90 au-delà provoque ensuite un déplacement vertical vers le bas des crémaillères 78 et permet donc le retour, par gravité, en position de repos des barres d'éjection 68.

La conception qui vient d'être décrite permet ainsi une très grande modularité, tant par la conception générale du dispositif 10 qui peut comporter jusqu'à quatorze plateaux superposés P, y compris le plateau le plus inférieur réalisé à partir de la plaque inférieure de fond 16inf, que par la conception de chaque plateau dont on peut faire varier le nombre de canaux C, et la largeur des différents canaux C.

La conception permet par ailleurs - au cours d'un cycle d'éjection - de provoquer, au moyen d'un seul moteur moto-réducteur 98, l'éjection simultanée de tous les produits souhaités dont une boîte "avant" est en position en regard d'un ou plusieurs électroaimants 54 qui constituent des actionneurs individuels d'éjection.

A titre de variante non représentée, pour provoquer les déplacements, notamment verticalement de bas en haut et simultanément des deux crémaillères 78, l'ensemble 90, 98 peut être remplacé par un vérin central (pneumatique ou électrique) qui agit directement sur une plaque transversale de synchronisation 94 qui, à cet effet, est fixée aux extrémités inférieures des crémaillères.

On notera que, pour un couloir de "grande" largeur "ℓ", et en fonction du poids de la boîte B à éjecter, il est possible d'agir simultanément sur la face inférieure de cette boîte au moyen de la face supérieure 65 de plusieurs, par exemple deux, électroaimants 54 adjacents dont les tiges mobiles 58 sont alors commandées simultanément en position sortie de travail.

Avantageusement, chaque électroaimant 54 n'est alimenté électriquement que pour provoquer la sortie de sa tige mobile 58 et il ne travaille pas en "effort", ou tout au moins seulement avec un effort très réduit dans la mesure où l'effort d'éjection proprement dit pour soulever les boîtes est exercé et appliqué par le moto réducteur 98.

Cette conception permet de dimensionner les actionneurs que constituent les électroaimants 54 avec de très petites dimensions et de très petites capacités en effort et qui, outre la réduction de prix et de poids, ne nécessitent que de très faibles courants pour leur commande.

La modularité de chaque plateau P peut être combinée, en vue de la commande de la distribution et de l'éjection des produits avec des moyens, pour chaque plateau P, de "détection" automatique de la présence de chaque plaque de séparation 34 en position active de cloison séparation, de manière à produire et fournir des signaux correspondants aptes à être traités par une unité électronique de commande (non représentée) de distribution associée au dispositif 10, ou à plusieurs dispositifs 10 assemblés entre eux.

Dans le premier mode de réalisation, dans lequel chaque plaque de séparation 34 est une plaque amovible démontable entre sa position active dans laquelle elle sépare deux canaux C adjacents et une position escamotée démontée, les moyens dits de détection d'une plaque en position active, aptes à fournir des signaux représentatifs de cette position, sont ici (à titre d'exemple non limitatif) des moyens électriques.

A cet effet, la partie arrière non fendue de la plaque à circuits imprimés avant 50 porte, au droit de chaque fente avant 38, une piste conductrice de contact (non représentée sur les figures) avec laquelle vient coopérer la face inférieure d'un crochet 36 d'une plaque de séparation 34 lorsque celle-ci est présente.

La plaque de fond 16, 16inf est par exemple isolante ou isolée, et la plaque 34 est par exemple réalisée en métal et son crochet avant 36 est en contact électrique avec une piste reliée à la masse.

A l'arrière, la plaque de doublage 46 porte une plaque à circuits imprimés arrière 51 qui porte notamment sur sa face supérieure une série de x petites pinces élastiques de contact de détection 110 dont chacune est reliée à une piste conductrice, non représentée, de détection appartenant à la plaque arrière 51.

Chaque pince de détection 110 reçoit le crochet arrière 36 d'une plaque 34 lorsque cette dernière est présente en position active de cloison de séparation.

La plaque métallique 34 établit ainsi un contact électrique entre la piste de la piste à la masse de la plaque à circuits imprimés avant 50 et la pince 110 de la plaque arrière 51.

Chaque plaque de séparation 34 en position active relie donc la pince 110 qui la reçoit à la masse électrique, en provoquant ainsi la formation d'un signal de présence de plaque 34 qui est ensuite transmis et analysé par l'unité électronique de commande à laquelle la plaque à circuits imprimés arrière 51 est reliée, notamment par des connecteurs 112 et des câblages associés non représentés.

De même, les blocs capteur 66 portés par la plaque à circuits imprimés avant 50 sont reliés à l'unité électronique de commande afin de transmettre des signaux représentatifs de la présence ou non d'une boîte B en position avant, et de l'éjection de cette boîte dont la face inférieure s'éloigne du capteur lorsqu'on l'éjecte.

La plaque arrière 51 comporte encore notamment des blocs capteur 114 agencés en regard des trous arrière 44 afin de détecter l'introduction ou la mise en place, par l'extrémité longitudinale arrière ouverte d'un canal C, de chaque boîte dans ce canal.

Les signaux ainsi formés par les capteurs 114 peuvent aussi être analysés par l'unité centrale électronique de commande pour une gestion du remplissage des canaux.

L'unité centrale de commande peut bien entendu être aussi reliée aux différents plateaux P appartenant à un ou plusieurs dispositifs 10 associés dans une même installation de distribution.

A titre de variante non représentée de ce premier mode de réalisation, les plaques de séparation peuvent équiper à demeure un plateau sur lequel elles sont montées coulissantes transversalement pour venir occuper une position déterminée active d'utilisation. Les plaques non utilisées demeurent alors stockées empilées transversalement les unes contre les autres d'un côté et/ou de l'autre du plateau dans une position escamotée.

A titre de variante non représentée, chaque plateau peut comporter des moyens d'entraînement longitudinal vers l'avant des boîtes, tels que des courroies ou analogues sur lesquelles reposent les boîtes.

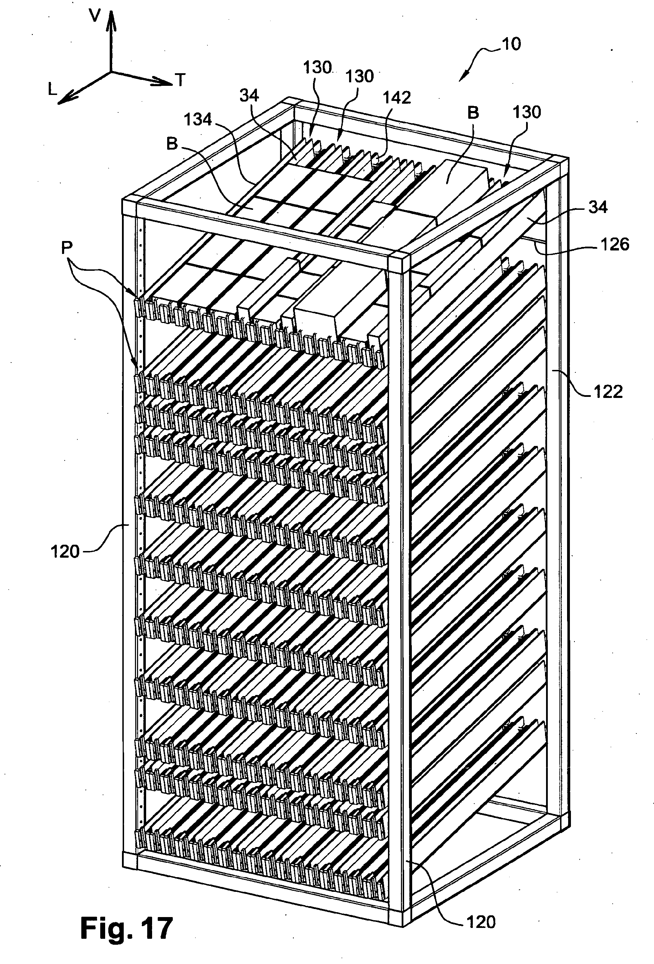

On décrira maintenant le deuxième mode de réalisation et ses variantes, illustrés aux figures 17 et suivantes.

De manière connue et classique, le dispositif 10 comporte ici un châssis parallélépipédique rectangle en tubes reliés entre eux aux huit coins ou angles. Le châssis comporte notamment deux montants verticaux avant 120 et deux montants verticaux arrière 122, qui jouent le même rôle que les plaques latérales 22, et entre lesquels s'étendent des paires de traverses horizontales avant 124 et arrière 126 associées, non représentées en détails, ou encore des plaques inclinées formant étagères.

Chaque paire de traverses 124, 126, avec la traverse arrière 126 située plus haut que la traverse avant 124, constitue un plan d'appui incliné vers l'avant sur lequel sont assemblés et reposent une série de modules longitudinaux adjacents 130 pour constituer un plateau P.

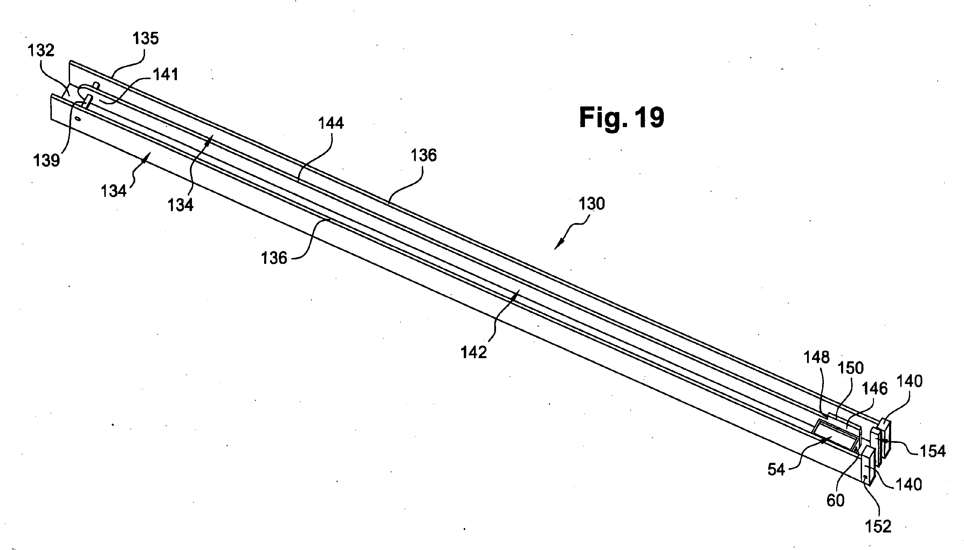

Chaque module 130 illustré à la figure 19 présente une section transversale en forme de U et comporte une plaque inférieure longitudinale 132 et deux ailes latérales verticales parallèles et opposées 134. Les ailes latérales 134 sont délimitées verticalement vers le haut par leurs bords supérieurs longitudinaux plans et coplanaires 136 qui jouent le même rôle de fond plat que la face supérieure 17 des plaques 16 selon le premier mode de réalisation, et sur lesquels les boites reposent par leurs faces inférieures.

Tous les modules sont identiques et tous les bords supérieurs 136 d'un même plateau P sont ainsi coplanaires, et sont inclinés pour constituer des surfaces inclinées, d'arrière en avant, de l'angle alpha par rapport à l'horizontale. Une boîte B posée sur au moins deux bords 136 est ainsi apte à glisser par gravité de haut en bas et d'arrière en avant globalement selon la direction longitudinale L.

Comme on peut le voir aux figures 17, 18 et 19, chaque aile latérale 134 est apte à être équipée, le long de sa face latérale externe 135, d'une plaque verticale et longitudinale de séparation 34.

Chaque plaque de séparation est fixée de manière amovible démontable et elle s'étend verticalement au-dessus du plan des bords supérieurs 136.

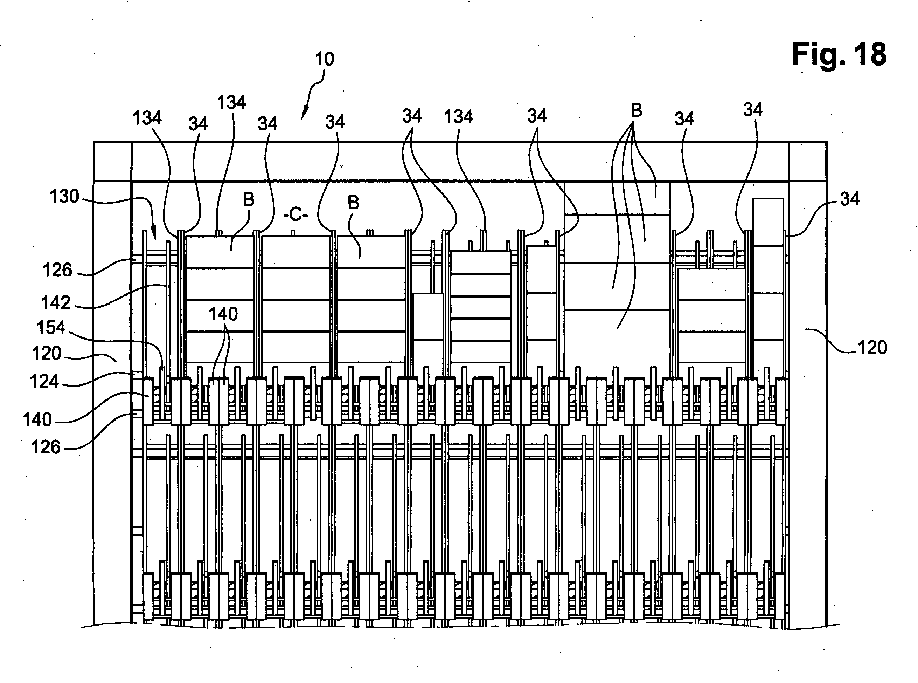

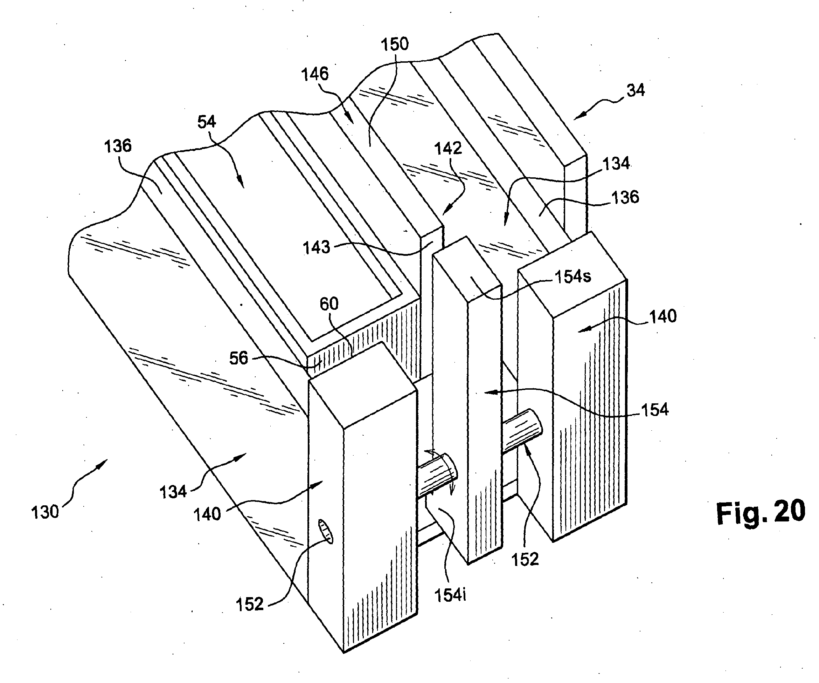

Chaque module 130 est par exemple ainsi apte à être équipé d'une cloison de séparation 34 le long de la face externe 135 de son aile latérale de droite en considérant par exemple les figures 18 et 20.

Les plaques de séparation 34 divisent ainsi l'espace situé au-dessus du plan des bords supérieurs 136 en une série de canaux C, ou couloirs, longitudinaux inclinés dont chacun peut loger une série de boîtes alignées et adjacentes longitudinalement.

Le fait d'équiper ou non un module 130 d'une plaque latérale de séparation 34 permet de constituer un plateau P avec des couloirs adjacents C de largeurs transversales différentes.

Comme dans le premier mode de réalisation, le dispositif est équipé de moyens, non représentés, permettant de savoir si une plaque de séparation 34 est présente ou non, et permettant de fournir des signaux électriques correspondants aptes à être traités par une unité électronique de commande (non représentée) de distribution associée au dispositif 10, ou à plusieurs dispositifs 10 assemblés entre eux.

Ces moyens peuvent être de tout type, électriques, optiques, magnétiques, etc.

A son extrémité longitudinale avant, chaque aile latérale 134 est équipée d'une barre verticale de butée avant fixe 140 qui est décalée verticalement vers le haut par rapport au plan des bords supérieurs 136, par exemple de l'ordre de 15 mm

Ainsi la première boîte avant de chaque rangée de boîtes contenues dans un canal C est en appui, longitudinal vers l'avant et vers le bas, par gravité contre les portions en vis-à-vis des barres de butée 140 qui s'étendent verticalement en travers de l'extrémité ouverte avant du canal C correspondant.

Chaque module 130 comporte une plaque mobile d'éjection 142 qui est une plaque centrale verticale parallèle aux ailes latérales, et qui est montée pivotante, au voisinage de son extrémité longitudinale arrière 141, autour d'un axe horizontal 139 de pivotement qui s'étend transversalement entre les deux ailes latérales 134.

A son extrémité longitudinale avant, le bord supérieur 144 comporte une portion surélevée 146 dont l'extrémité arrière verticale 148 constitue une butée orientée vers l'arrière dont la fonction sera expliquée par la suite.

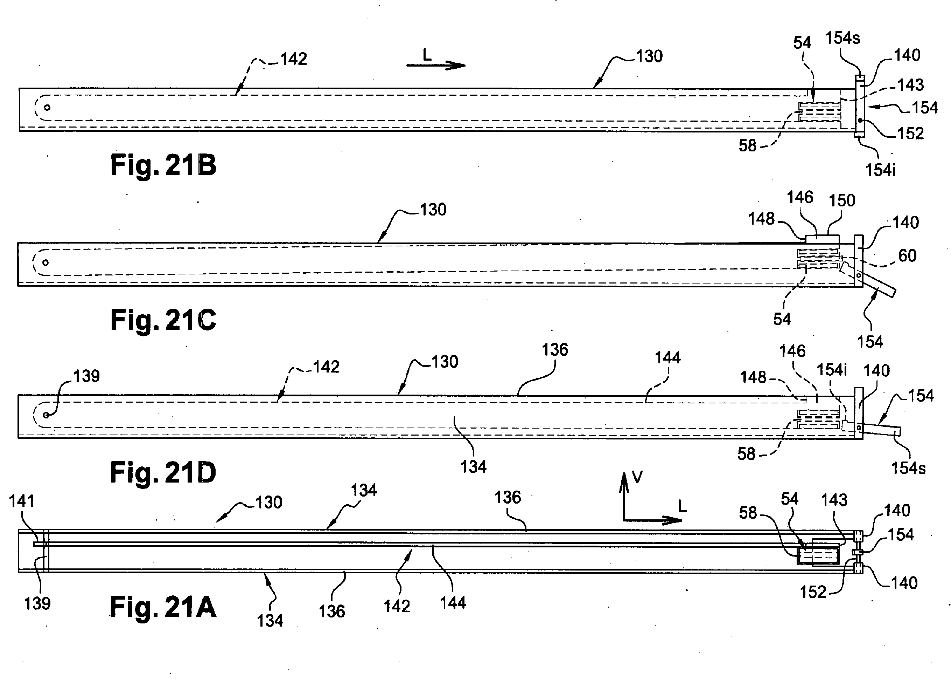

Dans sa position basse de repos (figure 21 B), le bord supérieur 144 de la plaque d'éjection 142 est situé en dessous, ou au plus dans le même plan que celui des bords supérieurs coplanaires 136.

Dans sa position haute d'éjection (figure 21C), au moins le bord horizontal supérieur 150 de la portion surélevée 146 s'étend verticalement au-dessus du plan des bords 136 et est apte à coopérer avec la face inférieure d'une boîte B présente dans le canal et en appui contre les butées 140

Chaque plaque d'éjection 142 porte, au voisinage de son extrémité longitudinale avant, un actionneur qui est ici encore constitué par un électroaimant 54, dont l'axe est d'orientation longitudinale, comportant notamment un corps cylindrique longitudinal de bobine 56 et un noyau ou tige mobile 58 qui s'étend longitudinalement vers l'avant. Le tronçon d'extrémité libre 60 de la tige 58 est susceptible d'occuper une position longitudinale sortie vers l'avant, dite de travail, et une position longitudinale rétractée vers l'arrière, dite de repos.

Comme on peut le voir aux figures, lorsque la bobine d'un électroaimant 54 est alimentée pour faire sortir longitudinalement vers l'avant la tige mobile 58 vers sa position de travail, au moins son tronçon d'extrémité libre avant 60 fait saillie longitudinalement vers l'avant au-delà du bord vertical d'extrémité avant 143 de la plaque d'éjection 142 sur laquelle est fixé l'électroaimant 54.

Les dimensions de l'électroaimant 54 sont telles qu'il peut "monter" verticalement entre les ailes latérales 134. Dans une telle position "haute" de l'électroaimant 54, l'extrémité arrière verticale 148 constitue une butée pour la boîte suivante qui est "arrêtée" par cette butée et ne peut atteindre temporairement les butées fixes 140.

Outre un électroaimant 54, les moyens commandés d'éjection d'une boîte avant contenu dans un canal C - pour la faire passer verticalement par-dessus les butées transversales 140 en vue de son éjection hors d'un canal C - comportent une barre transversale motorisée d'entraînement 152 qui est apte à coopérer avec le tronçon d'extrémité libre 60 de chaque tige mobile 58 d'électroaimant 54 en position sortie de travail, pour provoquer un déplacement vertical, globalement vers le haut de cette tige mobile 58.

La barre motorisée 152 est une barre transversale d'entraînement qui est entraînée en rotation autour de son axe (par un moteur de commande d'éjection non représenté aux figures) entre une position angulaire de repos et une position angulaire de travail, et qui porte une série de leviers radiaux 154 liés en rotation à la barre d'entraînement 152 et dont chacun est associé à un module et est apte à coopérer avec l'organe mobile en position de travail.

La barre 152 et les leviers radiaux 154 sont susceptibles d'être entraînés en rotation dans les deux sens, selon une course angulaire d'un peu plus de 90 degrés, entre une position de repos dans laquelle tous les leviers sont verticaux (figures 19, 20 et 21B) et constituent autant de butées verticales de grande hauteur, et une position active sensiblement horizontale d'éjection.

Bien entendu, on peut prévoir des moyens, non représentés, pour entraîner simultanément en rotation toutes les barres 152 équipant les différents plateaux P.

De par sa conception illustrée aux figues, outre sa fonction de levier radial d'éjection, chaque pièce 154 fait aussi fonction de butée supplémentaire escamotable de retenue de la boîte avant, et ceci lorsque cette pièce est en position verticale de repos illustrée par exemple aux figures 20 et 21B.

A cet effet, chaque levier radial comporte une branche inférieure d'éjection 154i qui est apte à coopérer avec le tronçon d'extrémité libre 60, et donc indirectement avec la face inférieure de la boîte, et une branche supérieure 154s faisant fonction de butée escamotable et dont la longueur est supérieure à celle de la branche inférieure 154i.

La hauteur de cette branche 154s faisant fonction de butée escamotable est par exemple de l'ordre de 10 à 15 mm de plus au-dessus des butées fixes 140. On dispose ainsi d'un ensemble de butées 154s de grande hauteur qui procurent une grande sécurité pour la retenue des boîtes avant, et ceci sans augmenter la hauteur totale fonctionnelle d'un plateau P dans la mesure où, pour l'éjection de la boîte avant, la butée 154s s'escamote et la boîte ne doit alors franchir que les butées fixes 140.

Les butées 154s sont particulièrement importantes pour retenir les premières boîtes avant lors du remplissage des couloirs C, lorsque de telles boîtes arrivent avec une grande énergie cinétique sur les butées de retenue.

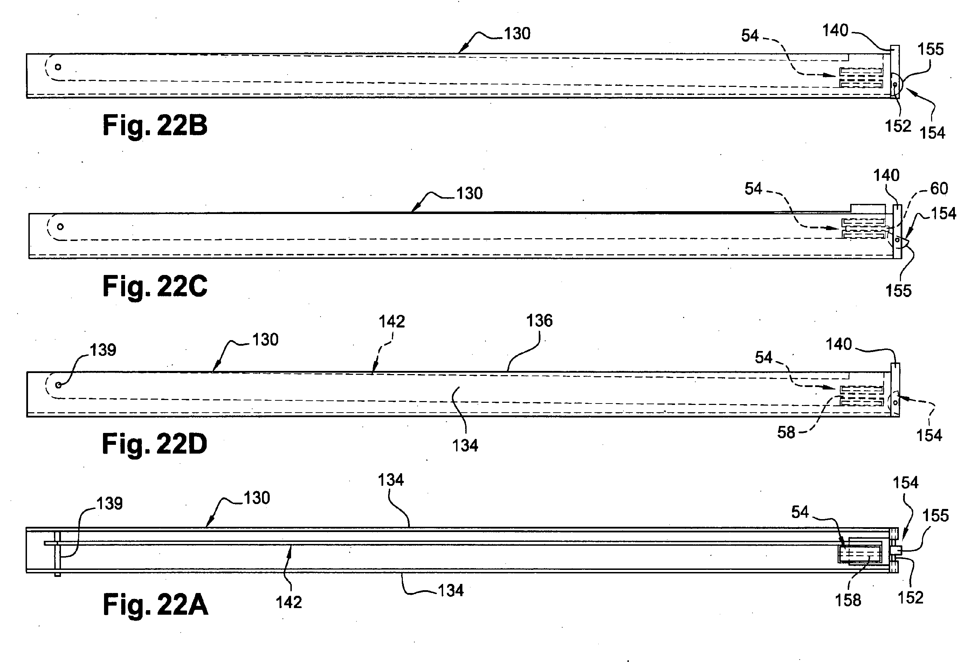

Dans la variante illustrée aux figures 22A à 22D, une face 155 de chaque levier radial 154 est réalisée sous la forme d'un profil de came arrondi convexe et il n'est ainsi plus nécessaire d'inverser le sens de rotation de la barre d'entraînement pour passer de la position d'éjection à la position de repos, les leviers-cames 154-155 tournant dans le sens horaire en considérant les figures.

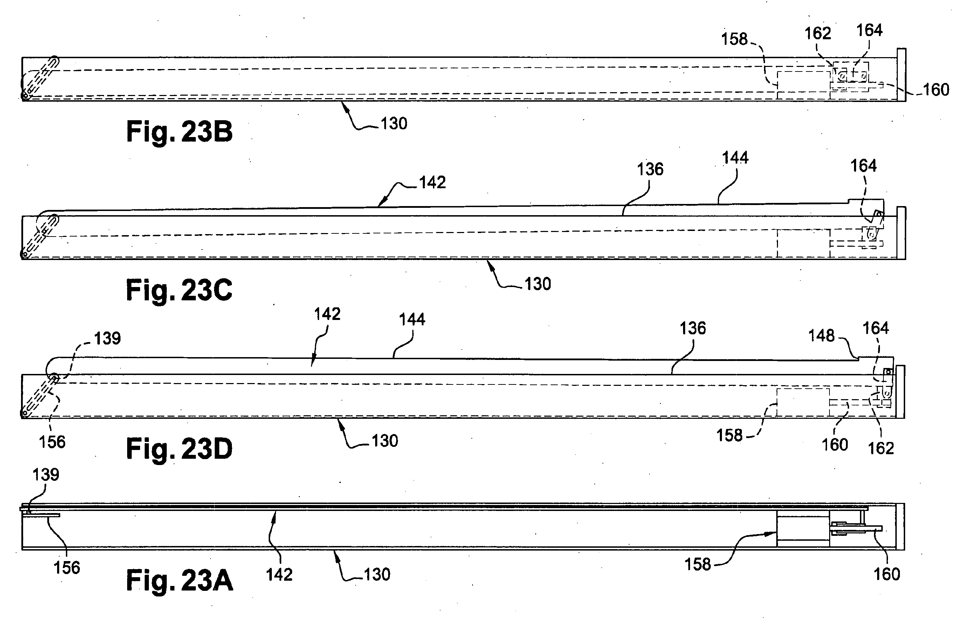

Dans la variante de réalisation illustrée aux figures 23A à 23C et 23E, la plaque d'éjection 142 est montée articulée à son extrémité arrière au moyen d'un levier arrière 156 sur lequel elle peut pivoter et coulisser et elle est entraînée individuellement par un moteur électrique 158 fixé au voisinage de l'extrémité longitudinale avant de la plaque 142 et dont l'arbre de sortie fileté 160, d'orientation longitudinale, est vissé dans un écrou 162 avec lequel elle constitue un système vis-écrou.

L'écrou 162 est solidaire d'un levier articulé avant 164. L'entraînement en rotation dans un sens ou l'autre du moteur 158 provoque la "montée" ou la descente" de la plaque de séparation 142.

Il est bien entendu possible de commander simultanément tous les moteurs du dispositif associés à des canaux C dont on veut éjecter des produits.

Comme on peut le voir en comparant les figures 23C et 23E, en position haute d'éjection, seule la partie supérieure avant de la plaque d'éjection 142 fait saillie verticalement vers le haut au-dessus des bords supérieurs 136, tandis que, grâce à la conception avec les leviers arrière 156 et avant 164, il est possible de déplacer globalement vers le haut toute la plaque d'éjection 142 qui fait alors fonction de plaque de séparation dans cette position haute extrême dans laquelle elle demeure "verrouillée" par le système vis-écrou 160-162, même lorsque l'on cesse d'alimenter le moteur électrique 158.

Un tel module 130 permet donc de ne plus utiliser les plaques latérales optionnelles de séparation 34 décrites précédemment, mais fait appel à leurs plaques mobiles centrales 142 pour faire alors fonction de plaques mobiles commandées de séparation dont chacune est entraînée par des moyens individuels motorisés d'entraînement, constitués par le moteur 158, en déplacement entre ses positions haute active et basse escamotée.

Ainsi un module 130 peut être un module utilisé pour sa fonction de "séparateur" ou pour sa fonction "d'éjecteur".

La commande électrique d'un moteur 158 permet de déterminer si la plaque centrale 142 est en position haute de séparation et donc de disposer d'un signal représentatif de cette position.

Selon une variante non représentée, le mouvement ou déplacement vers le haut d'une plaque 142 est combiné avec un déplacement transversal de cette plaque, globalement parallèlement à son plan, cette combinaison de mouvements étant obtenue par des rampes de guidage de la plaque portées par le module en "U" 130.

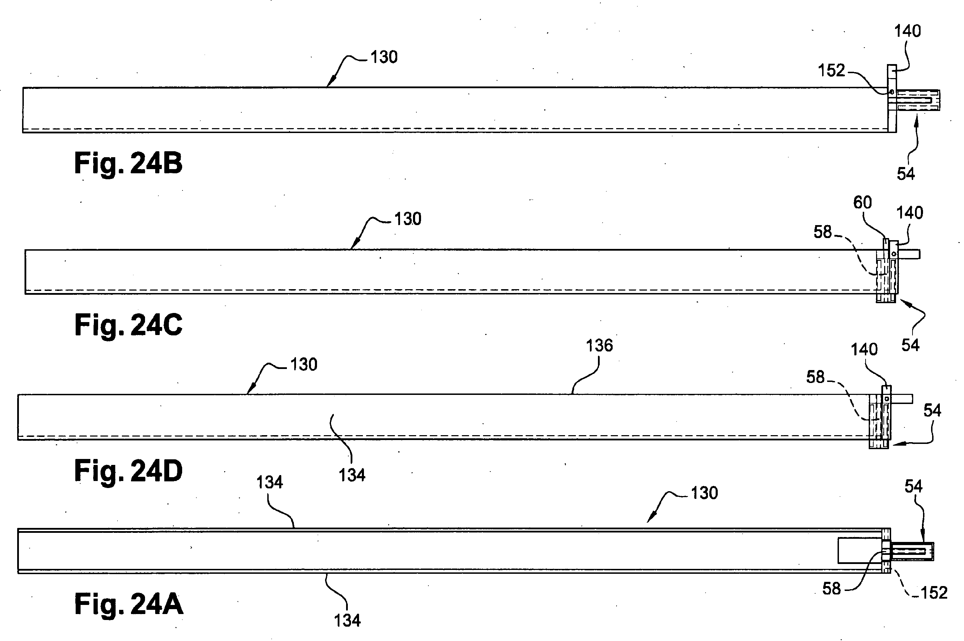

Dans la variante de réalisation illustrée aux figures 24A à 24C, le module 130 ne comporte plus de plaque centrale d'éjection, et chaque module comporte un électroaimant 54 qui est monté à rotation solidaire avec la barre d'entraînement commune 152.

Au repos, chaque électroaimant est horizontal avec sa tige 58 rentrée, qui est susceptible de faire saillie vers l'arrière pour que son tronçon d'extrémité libre s'étende en dessous de la face inférieure de la boîte la plus avant présente au-dessus du module 130. La tige étant sortie, la rotation dans le sens horaire provoque la coopération du tronçon d'extrémité libre 60 avec la boîte pour lui faire franchir les butées fixes verticales 140 à celle-ci.

D'autres variantes non représentées sont possibles. Chaque "cloison" de séparation entre deux canaux adjacents peut être réalisée sous la forme d'un ou plusieurs fils tendus en lieu et place d'une plaque de séparation proprement dite.

Chaque électroaimant peut par exemple être remplacé par un actionneur de même fonction tel qu'un vérin pneumatique ou hydraulique à simple ou à double effet ou encore par un actionneur faisant appel à un fil à mémoire de forme.

## Revendications

1. Dispositif (10) pour distribuer et éjecter automatiquement des produits (B) stockés en rangées longitudinales parallèles, qui comporte au moins un plateau (P) comportant :
- une série de canaux (C) adjacents transversalement dont chacun est apte à contenir une rangée de produits (B) qui sont agencés dans un même plan, qui sont séparés deux à deux par une cloison longitudinale (34) orthogonale audit plan, et dont chacun comporte un fond plat sur lequel reposent les produits ;
- des moyens de butée (40, 140) agencés à l'extrémité longitudinale avant de chaque canal contre lesquels le premier produit avant de chaque rangée est retenu en appui longitudinal ;
- et une série de moyens commandés d'éjection dont chacun est associé à un canal et est susceptible de coopérer avec ledit premier produit avant pour le faire passer verticalement par-dessus lesdits moyens de butée (40, 140), en vue de son éjection hors du canal ;
**caractérisé en ce que** chaque dispositif d'éjection comporte :
- une plaque mobile d'éjection (52, 142) qui est apte à agir, directement ou indirectement, sur la face inférieure d'au moins ledit premier produit avant pour en provoquer l'éjection ;
- un actionneur (54) qui est associé à chaque canal (C), qui est relié mécaniquement à ladite plaque d'éjection (52, 142) et qui comporte un organe mobile (60) qui est apte à être commandé entre une position de repos et une position de travail en vue de provoquer l'éjection ;
- et un organe motorisé d'entraînement (68, 154) qui est apte coopérer avec ledit organe mobile (60) en position de travail pour provoquer un déplacement vertical globalement vers le haut de la plaque d'éjection (52, 142).

2. Dispositif (10) selon la revendication 1, **caractérisé en ce que** :
- le corps de l'actionneur (54) est solidaire de la plaque d'éjection (52, 142) ;
- et l'organe motorisé d'entraînement (68, 154) est apte coopérer avec ledit organe mobile (60) en position de travail pour provoquer un déplacement vertical globalement vers le haut de l'actionneur (54), et ainsi de la plaque d'éjection (52, 142) à laquelle l'actionneur (54) est relié mécaniquement.

3. Dispositif (10) selon la revendication 2, **caractérisé en ce que** la plaque mobile d'éjection (52) est une plaque globalement parallèle audit plan et dont la face supérieure est apte à agir, directement ou indirectement, sur la face inférieure d'au moins ledit premier produit avant.

4. Dispositif (10) selon la revendication 3, **caractérisé en ce que** la plaque mobile d'éjection est une plaque flexible (52) déformable élastiquement entre une position basse de repos vers laquelle elle est rappelée élastiquement, et une position haute d'éjection dans laquelle elle s'étend verticalement vers le haut.

5. Dispositif (10) selon la revendication 4, **caractérisé en ce que** le corps de l'actionneur (54) est porté par la face supérieure (53) de la plaque flexible (52) d'éjection, et **en ce que** la face supérieure (64) du boîtier (62) de l'actionneur (54) est apte à coopérer avec la face inférieure dudit premier produit, en s'étendant vers le haut, notamment à travers une fenêtre correspondante (42), formée en vis-à-vis, d'une plaque de fond (16) commune à tous les canaux (C) d'un plateau (P).

6. Dispositif (10) selon la revendication 2, **caractérisé en ce que** la plaque mobile d'éjection (142) est une plaque orthogonale audit plan et dont le bord longitudinal supérieur est apte à agir sur la face inférieure d'au moins ledit produit avant pour en provoquer l'éjection.

7. Dispositif (10) selon la revendication 6, **caractérisé en ce que** :
- chaque cloison intermédiaire est une plaque de séparation (142) qui est montée mobile entre une position haute active de séparation dans laquelle elle fait saillie verticalement pour séparer deux canaux adjacents et une position basse escamotée ;
- chaque plaque mobile de séparation (142) est apte à constituer une plaque mobile d'éjection dont le bord longitudinal supérieur est apte à agir sur la face inférieure d'au moins ledit produit avant pour en provoquer l'éjection ; et
- lesdits moyens motorisés sont aptes à entraîner chaque plaque de séparation faisant fonction de plaque d'éjection entre sa position basse escamotée et une position haute d'éjection.

8. Dispositif (10) selon la revendication 7, **caractérisé en ce que** ladite position haute d'éjection est une position intermédiaire entre lesdites position basse escamotée et haute de séparation.

9. Dispositif (10) selon la revendication 1, **caractérisé en ce que** l'actionneur (54) est un électroaimant dont le noyau mobile (60) est apte à être commandé entre une position rentrée de repos et une position sortie de travail dans laquelle il est susceptible de coopérer avec l'organe motorisé d'entraînement.

10. Dispositif (10) selon la revendication 1, **caractérisé en ce que** l'organe motorisé d'entraînement (68, 152) est un organe commun à tous les moyens d'éjection qui est apte coopérer simultanément avec tous ceux desdits organes mobiles (60) qui sont en position de travail, pour provoquer l'éjection simultanée desdits premiers produits avant contenus dans les canaux correspondants.

11. Dispositif (10) selon la revendication 10, **caractérisé en ce que** l'organe motorisé d'actionnement est une barre transversale d'entraînement (68) qui est entraînée en déplacement, par un moteur de commande d'éjection, entre une position basse de repos et une position haute d'éjection dans laquelle elle coopère simultanément avec lesdits organes mobiles (60) en position de travail.

12. Dispositif (10) selon la revendication 6, **caractérisé en ce que** l'organe motorisé d'actionnement est une barre transversale d'entraînement (152) qui est entraînée en rotation autour de son axe, par un moteur de commande d'éjection, entre une position angulaire de repos et une position angulaire de travail, et qui porte une série de leviers radiaux (154) liés en rotation à la barre d'entraînement et dont chacun est apte à coopérer avec un organe mobile (60) en position de travail d'un canal associé.

13. Dispositif (10) selon la revendication 12, **caractérisé en ce que** chaque levier radial (154) comporte une branche (154i) qui, en position angulaire de repos de la barre (152) d'entraînement, fait fonction de butée agencée à l'extrémité longitudinale avant de chaque canal (C) contre laquelle le premier produit avant de chaque rangée est retenu en appui longitudinal.

## Claims

1. A device (10) for automatically dispensing and ejecting products (B) stored in parallel longitudinal rows, that comprises at least one rack (P) comprising:
- a series of transversely adjacent channels (C), each able to hold a row of products (B), all in the same plane as each other, each separated from its neighbor or neighbors by a longitudinal partition (34) perpendicular to said plane, and each having a flat base on which the products rest;
- stop means (40, 140) at the forward longitudinal end of each channel against which the forwardmost product in each row is retained by longitudinal abutment;
- and a series of controlled ejector means, of which each corresponds to one channel and is able to act on said forwardmost product in order to pass it vertically over said stop means (40, 140) for its ejection from the channel;
**characterized in that** each ejector device comprises:
- a movable ejector plate (52, 142) capable of acting, directly or indirectly, on the lower face of at least said forwardmost product in order to eject it;
- an actuator (54) which corresponds to each channel (C), which is connected mechanically to said ejector plate (52, 142) and comprises a movable member (60) that can be controlled between a rest position and a working position in order to eject it.
and a motorized drive member (68, 154) able to act on said movable member (60) in the working position in order to produce a generally upward vertical movement of the ejector plate (52, 142).

2. The device (10) as claimed in claim 1, **characterized in that**:
- the body of the actuator (54) is connected to the ejector plate (52, 142);
- and the motorized drive member (68, 154) is able to act on said movable member (60) in the working position to produce a generally upward vertical movement of the actuator (54), and hence of the ejector plate (52, 142) to which the actuator (54) is mechanically connected.

3. The device (10) as claimed in claim 2, **characterized in that** the movable ejector plate (52) is a plate generally parallel to said plane with an upper face capable of acting, directly or indirectly, on the lower face of at least said forwardmost product.

4. The device (10) as claimed in claim 3, **characterized in that** the movable ejector plate is a flexible plate (52) that is elastically deformable between a low or rest position, to which it is returned elastically, and a high or ejection position, in which it extends upward vertically.

5. The device (10) as claimed in claim 4, **characterized in that** the body of the actuator (54) is mounted on the upper face (53) of the flexible ejector plate (52), and **in that** the upper face (64) of the casing (62) of the actuator (54) is able to act on the lower face of said forwardmost product, by extending upward, notably through a corresponding window (42) facing it through a base plate (16) common to all the channels (C) of a rack (P).

6. The device (10) as claimed in claim 2, **characterized in that** the movable ejector plate (142) is a plate that is perpendicular to said plane and whose upper longitudinal edge is able to act on the lower face of at least said forwardmost product in order to eject it.

7. The device (10) as claimed in claim 6, **characterized in that**:
- each intermediate partition is a separating plate (142) mounted movably between a high active position of separation in which it projects vertically to separate two adjacent channels and a low retracted position;
- each movable separating plate (142) is able to form a movable ejector plate whose upper longitudinal edge is able to act on the lower face of at least said forwardmost product in order to eject it; and
- said motorized means are able to drive each separating plate acting as an ejector plate between its low retracted position and a high ejection position.

8. The device (10) as claimed in claim 7, **characterized in that** said high ejection position is an intermediate position between said low retracted position and said high separating position.

9. The device (10) as claimed in claim 1, **characterized in that** the actuator (54) is an electromagnet whose movable core (60) is controllable between a withdrawn rest position and an extended working position in which it can be acted on by the motorized drive member.

10. The device (10) as claimed in claim 1, **characterized in that** the motorized drive member (68, 152) is a member common to all the ejector means which is able to act simultaneously on all of said movable members (60) which are in the working position, in order to simultaneously eject said forwardmost products contained in the corresponding channels.

11. The device (10) as claimed in claim 10, **characterized in that** the motorized actuating member is a transverse drive bar (68) that is driven, by an ejection control motor, between a low or rest position and a high or ejection position in which it acts simultaneously on said movable members (60) in the working position.

12. The device (10) as claimed in claim 6, **characterized in that** the motorized actuating member is a transverse drive bar (152) that is rotated about its axis, by an ejection control motor, between an angular rest position and an angular working position, and that carries a series of radial levers (154) coupled in rotation to the drive bar and each able to act on a movable member (60) in the working position of a corresponding channel.

13. The device (10) as claimed in claim 12, **characterized in that** each radial lever (154) comprises an arm (154i) which, in the angular rest position of the drive bar (152), acts as a stop located at the forward longitudinal end of each channel (C), against which the forwardmost product of each row is retained in longitudinal abutment.

## Patentansprüche

1. Vorrichtung (10) zum automatischen Ausgeben und Ausstoßen von in parallelen Längsreihen gelagerten Produkten (B), die mindestens ein Gestell (P) aufweist, das folgendes besitzt:
- eine Reihe von Kanälen (C), die in Querrichtung aneinander angrenzen, und von denen jeder eine Reihe von Produkten (B) enthält, die in derselben Ebene angeordnet sind, und die paarweise durch eine orthogonale Längswand (34) zu der Ebene voneinander getrennt sind, wobei jeder einen ebenen Boden besitzt, auf dem die Produkte ruhen;
- Anschlagelemente (40, 140), die an dem vorderen Längsende eines jeden Kanals angeordnet sind, und gegenüber denen das erste vordere Produkt jeder Reihe in Längsrichtung abgestützt wird;
- und eine Reihe von Steuerelementen zum Ausstoßen, die jeweils mit einem Kanal verbunden sind und mit dem ersten vorderen Produkt zusammenwirken, so dass dies vertikal über die Anschlagelemente (40, 140) gelangt bzw. geführt wird, um dann aus dem Kanal ausgestoßen zu werden;
**dadurch gekennzeichnet, dass** jede Vorrichtung zum Ausstoßen folgendes aufweist:
- eine bewegliche Ausstoßplatte (52, 142), die direkt oder indirekt auf der Unterseite mindestens des ersten vorderen Produktes wirkt, um seinen Ausstoß zu bewirken;
- ein Betätigungsgerät (54), das mit jedem Kanal (C) verbunden ist, und das mechanisch mit der Ausstoßplatte (52, 142) verbunden ist und ein bewegliches Organ (60) besitzt, welches zwischen einer Ruheposition und einer Arbeitsposition gesteuert werden kann, um den Ausstoß zu bewirken;
- und ein motorisiertes Antriebsorgan (68, 154), das mit dem beweglichen Organ (60) in der Arbeitsposition zusammenwirken kann, um eine im wesentlichen vertikale Verschiebung zu der oberen Seite der Ausstoßplatte (52, 142) hin zu bewirken.

2. Vorrichtung (10) nach Anspruch 1, **dadurch gekennzeichnet, dass**:
- der Hauptteil des Betätigungsgerätes (54) aus einem Stück mit der Ausstoßplatte (52, 142) gebildet ist;
- und das motorisierte Antriebsorgan (68, 154) mit dem beweglichen Organ (60) in der Arbeitsposition zusammenwirken kann, um eine im wesentlichen vertikale Verschiebung zu der oberen Seite des Betätigungsgerätes (54) hin, und somit der Ausstoßplatte (52, 142), zu bewirken, mit der das Betätigungsgerät (54) mechanisch verbunden ist.

3. Vorrichtung (10) nach Anspruch 2, **dadurch gekennzeichnet, dass** die bewegliche Ausstoßplatte (52) eines im wesentlichen parallel zu der Ebene verlaufende Platte ist, deren Oberseite direkt oder indirekt auf die Unterseite des mindesten ersten vorderen Produktes wirken kann.

4. Vorrichtung (10) nach Anspruch 3, **dadurch gekennzeichnet, dass** die bewegliche Ausstoßplatte eine zwischen einer unteren Ruheposition, in der sie elastisch zurückgeholt wird, und einer oberen Ausstoßposition, in der sie vertikal nach oben verläuft, elastisch verformbare flexible Platte (52) ist.

5. Vorrichtung (10) nach Anspruch 4, **dadurch gekennzeichnet, dass** sich der Hauptteil des Betätigungsgerätes (54) an der Oberseite (53) der flexiblen Ausstoßplatte (52) befindet, und dass die Oberseite des Gehäuses (64) des Betätigungsgerätes (54) mit der Unterseite des ersten Produktes zusammenwirkt, indem er nach oben verläuft, insbesondere durch ein entsprechendes Fenster (42) einer Bodenplatte (16), die sämtlichen Kanälen (C) einer Platte (P) gemeinsam ist, und das gegenüber gebildet ist.

6. Vorrichtung (10) nach Anspruch 2, **dadurch gekennzeichnet, dass** die bewegliche Ausstoßplatte (142) eine zu der Ebene orthogonal verlaufende Platte ist, deren obere Längskante auf der Unterseite mindestens des vorderen Produktes wirken kann, um den Ausstoß zu bewirken.

7. Vorrichtung (10) nach Anspruch 6, **dadurch gekennzeichnet, dass**:
- jede Zwischenwand oder Trennwand eine Trennplatte (142) ist, die beweglich zwischen einer aktiven oberen Position der Trennung, in der sie vertikal hervorsteht, um die beiden aneinander angrenzenden Kanäle voneinander zu trennen, unter einer unteren eingefahrenen Position montiert ist:
- jede bewegliche Trennplatte (142) eine bewegliche Ausstoßplatte (142) bilden kann, deren obere Längskante auf die Unterseite mindestens des vorderen Produktes wirken kann, um den Ausstoß zu bewirken; und
- die motorisierten Elemente jede Trennplatte antreiben können, die als Ausstoßplatte zwischen ihrer unteren eingefahrenen Position und einer oberen Ausstoßposition dient.

8. Vorrichtung (10) nach Anspruch 7, **dadurch gekennzeichnet, dass** die obere Ausstoßposition eine Zwischenposition zwischen der unteren eingefahrenen Position und der oberen Trennposition ist.

9. Vorrichtung (10) nach Anspruch 1, **dadurch gekennzeichnet, dass** das Betätigungsgerät (54) ein Elektromagnet ist, dessen beweglicher Kern (60) zwischen einer eingefahrenen Ruheposition und einer ausgefahrenen Arbeitsposition betätigt werden kann, in der er mit dem motorisierten Antriebsorgan zusammenwirken kann.

10. Vorrichtung (10) nach Anspruch 1, **dadurch gekennzeichnet, dass** das motorisierte Antriebsorgan (68, 152) ein allen Ausstoßelementen gemeinsames Organ ist, das gleichzeitig mit jenen der beweglichen Organe (60) zusammenwirken kann, die sich in Arbeitsposition befinden, um den gleichzeitigen Ausstoß der ersten vorderen Produkte zu bewirken, die sich in den jeweiligen Kanälen befinden.

11. Vorrichtung (10) nach Anspruch 10, **dadurch gekennzeichnet, dass** das motorisierte Antriebsorgan eine querverlaufende Antriebsstange (68) ist, die in ihrer Bewegung von einem Antriebsmotor für den Ausstoß angetrieben wird, und zwar zwischen einer unteren Ruheposition und einer oberen Ausstoßposition, in der sie gleichzeitig mit den beweglichen Organen (60) in Arbeitsposition zusammenwirkt.

12. Vorrichtung (10) nach Anspruch 6, **dadurch gekennzeichnet, dass** das motorisierte Antriebsorgan eine querverlaufende Antriebsstange (152) ist, die durch einen Antriebsmotor für den Ausstoß um ihre Achse herum gedreht wird, und zwar zwischen einer Winkelposition der Ruhestellung und einer Winkelposition der Arbeitsstellung, und die eine Reihe von Radialhebeln (154) aufweist, die drehbar mit der Antriebsstange verbunden sind, und die jeweils mit einem beweglichen Organ (60) in Arbeitsposition eines verbundenen Kanals zusammenwirken können.

13. Vorrichtung (10) nach Anspruch 12, **dadurch gekennzeichnet, dass** jeder Radialhebel (154) einen Abschnitt (154i) besitzt, der in der Winkelposition der Ruhestellung der Antriebsstange (152) als Anschlag dient, und der am Längsende vor jedem Kanal (C) angeordnet ist, gegenüber dem das erste vordere Produkt jeder Reihe in Längsrichtung abgestützt wird.
